# DEMANDE DE BREVET EUROPEEN

(11) **EP 1 306 542 A1**
(43) Date de publication de la demande: **02.05.2003**
(21) Numéro de dépôt: 02292565.5
(22) Date de dépôt: 17.10.2002
(51) Int. Cl.: F02M 35/10, F16L 37/084

(54) **Filtre à air, conduit d'admission et ensemble constitué d'un filtre et d'un conduit d'admission de ce genre**

(30) Priorité: 24.10.2001 FR 0113739
(71) Demandeur: WECOSTA, 59000 Roubaix (FR)
(72) Inventeur: Lepoutre, Henri, 59000 Roubaix (FR)
(74) Mandataire: Eidelsberg, Olivier Nathan

(57) **Abrégé**

Filtre F à air, notamment pour un véhicule automobile à combustion interne, comportant un conduit 1 de raccordement à un conduit 5 d'admission, un tronçon 3 femelle du conduit de raccordement étant destiné à venir en recouvrement d'un tronçon mâle du conduit d'admission, caractérisé en ce que le tronçon 3 femelle comporte deux ouvertures 7 longitudinales parallèles, les deux ouvertures 7 étant de préférence diamétralement opposées, et le tronçon 3 femelle comporte un embout en forme de chanfrein 4 tronconique, de sorte que le tronçon 3 femelle soit de plus grande dimension en section transversale que le reste 2 du conduit 1 de raccordement ; et il est prévu des moyens de fixation, notamment amovibles, du filtre à un conduit 5 d'admission.

## Description

La présente invention se rapporte à un filtre à air, notamment pour un véhicule automobile à combustion interne. La présente invention se rapporte également à un conduit d'admission, notamment un conduit d'admission thermoformé en un matériau non tissé. La présente invention se rapporte également à un ensemble constitué d'un filtre suivant l'invention et d'un conduit d'admission suivant l'invention.

Les conduits d'admission d'air, notamment pour les véhicules automobiles à combustion interne, qui sont réalisés par thermoformage en un matériau non tissé, notamment en polyester, comportent, en raison du procédé de fabrication par moulage, deux trottoirs parallèles à l'axe longitudinal du conduit faisant saillie de la surface extérieure du conduit, notamment en étant diamétralement opposés. Ces deux trottoirs servent à réaliser la jonction par soudage ou par un autre procédé de liaison des deux hémi-coquilles formées par moulage afin d'obtenir le conduit d'admission final.

Les filtres à air classiques qui sont généralement réalisés en plastique rigide, et sous la forme d'un conduit, sont emmanchés avec ajustement serré dans le conduit du filtre à air. L'existence des trottoirs ne permet plus de réaliser une liaison étanche de ce genre entre le filtre et le conduit d'admission.

La présente invention vise un filtre à air pouvant être connecté de manière simple et facile au conduit d'admission d'un collecteur d'admission, notamment d'un conduit d'admission ayant deux trottoirs faisant saillie de sa surface extérieure, tout en ayant une bonne étanchéité vis-à-vis des gaz transportés à l'intérieur du filtre et du conduit d'admission, c'est-à-dire aussi bonne que dans le cas des raccordements filtre/conduit d'admission de l'art antérieur.

Suivant l'invention, le filtre à air, notamment pour un véhicule automobile à combustion interne, comportant un conduit de raccordement à un conduit d'admission, un tronçon femelle du conduit de raccordement étant destiné à venir en recouvrement d'un tronçon mâle du conduit d'admission, est caractérisé en ce que le tronçon femelle comporte deux ouvertures longitudinales parallèles, les deux ouvertures étant de préférence diamétralement opposées, et le tronçon femelle comporte un embout en forme de chanfrein tronconique, de sorte que le tronçon femelle soit de plus grande dimension en section transversale que le reste du conduit de raccordement ; et il est prévu des moyens de fixation, notamment amovibles, du filtre au conduit d'admission.

En prévoyant ainsi d'une part, des ouvertures longitudinales permettant de recevoir des trottoirs formés à la surface extérieure d'un conduit d'admission thermoformé et d'autre part, une bordure dans laquelle va venir buter l'extrémité libre du conduit d'admission, on va pouvoir emmancher le filtre sur le conduit d'admission et obtenir une bonne étanchéité à la liaison entre le filtre et le conduit d'admission, les moyens de fixation permettant ensuite de maintenir cette étanchéité.

Suivant un mode de réalisation particulièrement préféré de l'invention, les moyens de fixation comportent au moins une fenêtre formée dans la paroi du tronçon femelle et dans laquelle est destinée à venir s'encliqueter au moins une protubérance formée sur une surface extérieure du conduit d'admission. On obtient ainsi une fixation particulièrement simple et bien étanche du filtre au conduit d'admission.

Suivant un mode de réalisation préféré de l'invention, il est prévu deux fenêtres diamétralement opposées l'une à l'autre, de préférence suivant le diamètre de la section transversale perpendiculaire au diamètre suivant lequel sont disposées diamétralement opposées les deux ouvertures.

Suivant un mode de réalisation préféré, les ouvertures longitudinales sont recouvertes par des nervures creuses, dont les dimensions sont suffisantes pour recevoir les trottoirs du conduit d'admission.

La présente invention se rapporte également à un conduit d'admission réalisé par thermoformage en matériau non tissé, notamment en polyester, qui comporte deux trottoirs parallèles à l'axe longitudinal du conduit, en faisant saillie de cette surface extérieure du conduit, notamment en étant diamétralement opposés.

Suivant l'invention, ce conduit d'admission thermoformé comporte à son extrémité libre un bombement annulaire destiné à venir buter contre un chanfrein d'un filtre à air suivant l'invention.

En outre, le conduit d'admission suivant l'invention peut également comporter des moyens de fixation permettant sa fixation au filtre à air, et notamment ces moyens de fixation peuvent être constitués d'au moins une protubérance, de préférence deux protubérances diamétralement opposées, destinées à venir s'encliqueter dans une ou des fenêtres formées dans le tronçon femelle d'un filtre suivant l'invention.

Suivant un mode de réalisation particulièrement avantageux de l'invention, le bombement annulaire comporte un bord avant formant un angle avec l'axe longitudinal du conduit, notamment de 30° à 50°, et le bord avant est déformable, notamment en raison de la souplesse ou de l'élasticité du matériau en lequel est formé l'embout, pour venir buter contre un chanfrein d'un filtre, chanfrein qui fait un angle compris entre 50° et 70° par rapport à l'axe longitudinal.

Ainsi, lorsque le bombement formé à l'extrémité libre du conduit va venir en butée contre le filtre, celui-ci va appuyer contre le chanfrein et se déformer légèrement pour obtenir une inclinaison qui sera par exemple d'environ 60° ce qui contribuera à l'amélioration de l'étanchéité, le conduit étant maintenu fermement contre ce chanfrein par les moyens de fixation, notamment par la coopération entre les fenêtres et les protubérances. De plus cela supprime les jeux entre le filtre et le conduit.

Suivant un mode de réalisation particulièrement préféré de l'invention, les protubérances sont réalisées, en coupe transversale, sous la forme d'échelon progressif. Ceci permet d'adoucir la transition pour l'écoulement du fluide au niveau des protubérances, il est formé une transition en douceur permettant de maintenir un écoulement stable.

Suivant un mode de réalisation avantageux supplémentaire, il est également formé un échelon au niveau des trottoirs de part et d'autre de ceux-ci. Cette forme en échelon de la section transversale au niveau des trottoirs permet également de maintenir un écoulement du fluide stable et uniforme.

La présente invention concerne également un ensemble constitué d'un filtre à air et d'un conduit d'admission suivant l'invention.

On décrit maintenant un mode de réalisation de l'invention, donné uniquement à titre d'exemple, en se reportant aux dessins annexés dans lesquels :
La figure 1 est une vue en perspective d'un conduit de filtre et d'un conduit d'admission ;
La figure 2 est une vue en perspective du conduit de filtre et du conduit d'admission de la figure 1 à l'état assemblés ;

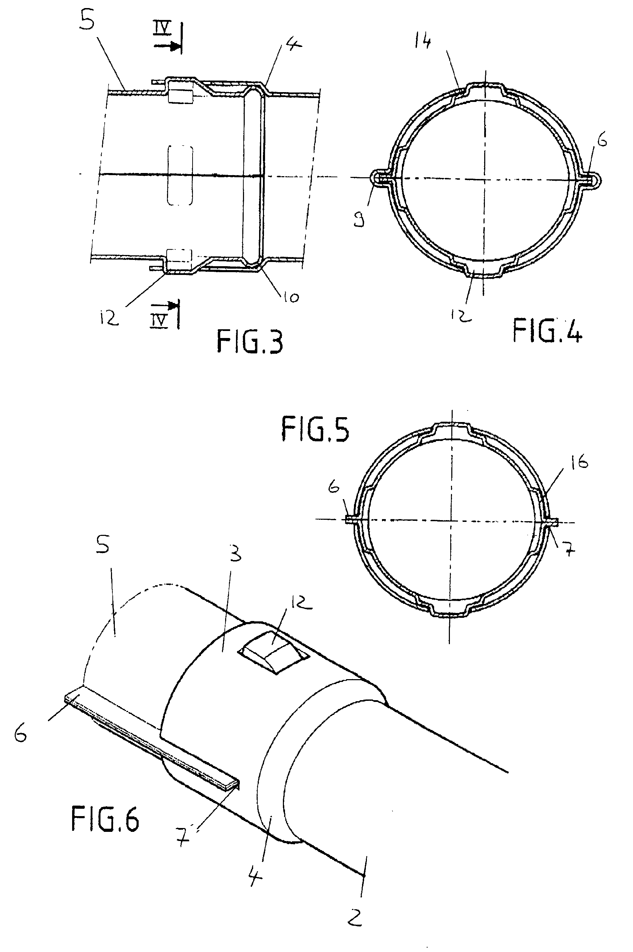

La figure 3 est une vue en coupe longitudinale d'une partie de la figure 2, au niveau de la liaison entre les deux conduits ;
La figure 4 est une vue en coupe transversale suivant la ligne IV-IV de la figure 3 ;
La figure 5 est une vue en coupe transversale d'un mode de réalisation en variante d'un conduit de filtre et d'un conduit d'admission suivant l'invention ; et
La figure 6 est une vue en perspective du mode de réalisation représenté à la figure 5.

Aux figures, on voit l'extrémité d'un conduit 1 du filtre F. Ce conduit 1 est de forme cylindro-circulaire. Il est constitué d'un premier tronçon 2 d'un premier diamètre et d'un deuxième tronçon 3, ou tronçon femelle, d'un diamètre supérieur à celui du premier diamètre, les deux tronçons étant raccordés par un embout 4 en forme de chanfrein tronconique. Ce chanfrein 4 s'étend sur tout le pourtour périphérique du conduit.

Aux figures on voit également un conduit 5 d'admission formé par thermoformage en matériau non tissé, notamment en polyester. Ce conduit 5 d'admission est constitué de deux demi-cylindres raccordés au niveau de deux trottoirs 6 parallèles à l'axe longitudinal du conduit. Le raccord s'effectue notamment par soudage ou thermosoudage des trottoirs des deux demi-coquilles ou demi-cylindre l'une avec l'autre. Il est formé sur tout le long du tronçon 3 femelle du filtre F deux fentes 7 longitudinales diamétralement opposées et dans lesquelles sont destinés à s'enfiler les trottoirs 6 lors de l'insertion du filtre F et notamment de son tronçon 3 femelle par dessus le conduit d'admission 5.

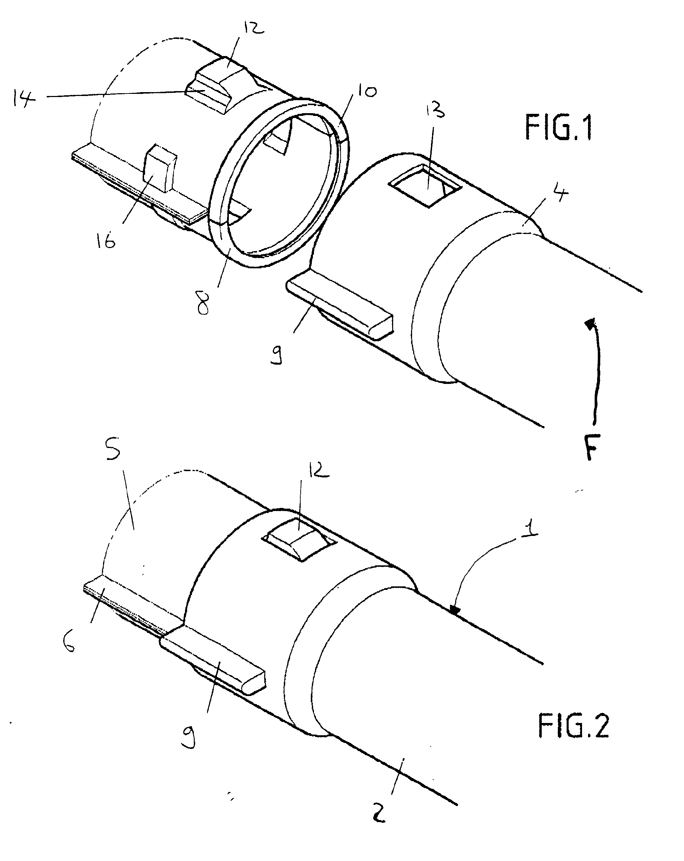

Suivant un mode de réalisation préféré de l'invention, que l'on peut voir à la figure 1 en particulier, les deux fentes longitudinales 7 sont recouvertes par deux nervures 9 formées sur le filtre F et faisant saillie de ce filtre F et ces deux nervures ont des dimensions suffisantes pour venir en recouvrement des trottoirs 6.

A l'extrémité libre du conduit d'admission 5, c'est-à-dire l'extrémité destinée à venir s'enfiler dans le tronçon femelle du filtre F, il est formé un bombement 8 annulaire sur toute la périphérie du conduit. Ce bombement 8 annulaire peut être formé notamment par pliage. Le bord avant 10 de ce bombement 8 du conduit 5 forme notamment un angle d'environ 45° avec l'axe longitudinal du conduit. Les dimensions et notamment le diamètre maximum du bombement 10 correspond au diamètre intérieur du tronçon 3 femelle du filtre F. Lorsque le conduit est inséré dans le filtre comme on le voit à la figure 2, le bombement vient buter contre le chanfrein 4 du filtre et se déforme en raison de sa souplesse dans le sens opposé au mouvement. L'angle que forme alors le chanfrein avec l'axe longitudinal augmente pour passer à 60° environ, qui correspond à l'angle que forme le chanfrein par rapport à l'axe longitudinal. On obtient ainsi une bonne étanchéité au niveau de l'interface entre le conduit d'admission et le filtre F. De plus cela supprime les jeux.

A distance de ce bombement 8 le long de l'axe longitudinal du conduit, il est formé deux protubérances 12 faisant saillie du conduit d'admission. Ces deux protubérances 12, notamment formées d'une pièce directement à partir de thermo-moulage par compression des deux demi-coquilles, font saillie d'une part au-delà du conduit d'admission mais également au-delà du diamètre défini par celui du tronçon 3 femelle du filtre. En outre, dans le tronçon 3 femelle du filtre, il est formé, à distance du chanfrein 4, une fenêtre 13 correspondant en dimension à peu près à la dimension de la protubérance 12 de sorte que celle-ci puisse venir s'encliqueter dans la fenêtre 13 et maintenir par encliquetage la liaison entre le conduit 5 et le filtre F. De préférence, il est formé une protubérance et une ouverture en haut à la figure et en bas à la figure, c'est-à-dire suivant un diamètre du conduit perpendiculaire au diamètre suivant lequel s'étendent les deux trottoirs extérieurs.

Enfin, afin de permettre une certaine continuité en douceur du débit gazeux lors du passage du gaz du conduit d'admission vers le filtre, il est formé deux échelons 14 au niveau des protubérances 12, de part et d'autre de chaque protubérance comme on peut le voir suivant la vue de la figure 2 en coupe transversale. Ces deux échelons 14 respectifs de la protubérance 12 permettent de maintenir une certaine constance du flux gazeux et donc de la vitesse des gaz entre le conduit et le filtre et d'éviter la formation locale de tourbillons.

Dans le même but, il peut également être formé des échelons 16 au niveau des trottoirs pour ainsi agrandir la section transversale du conduit pour qu'elle corresponde mieux à celle du filtre F et en même temps éviter des discontinuités trop abruptes lors du passage du débit gazeux au niveau du conduit d'admission où se trouvent les trottoirs.

En outre, ces deux échelons ou reliefs permettent d'obtenir un bon centrage de l'embout du boîtier sur le conduit.

La section transversale des différents conduits est ici circulaire. Elle peut bien évidemment avoir une forme cylindrique, par exemple carrée, rectangulaire, elliptique, héxagonale, etc.

## Revendications

1. Filtre (F) à air, notamment pour un véhicule automobile à combustion interne, comportant un conduit (1) de raccordement à un conduit (5) d'admission, un tronçon (3) femelle du conduit de raccordement étant destiné à venir en recouvrement d'un tronçon mâle du conduit d'admission, **caractérisé en ce que** le tronçon (3) femelle comporte deux ouvertures (7) longitudinales parallèles, destinées à recevoir en leur sein des trottoirs (6) qui font saillis à l'extérieur de la paroi du conduit (5) d'admission avec lequel est destiné à coopérer le conduit (1) de raccordement, les deux ouvertures (7) étant de préférence diamétralement opposées, et le tronçon (3) femelle comporte un embout en forme de chanfrein (4) tronconique, de sorte que le tronçon (3) femelle soit de plus grande dimension en section transversale que le reste (2) du conduit (1) de raccordement ; et il est prévu des moyens de fixation, notamment amovibles, du filtre au conduit (5) d'admission.

2. Filtre (F) à air suivant la revendication 1, **caractérisé en ce que** les moyens de fixation comportent au moins une fenêtre (13) formée dans la paroi du tronçon (3) femelle et dans laquelle est destinée à venir s'encliqueter au moins une protubérance (12) formée sur une surface extérieure du conduit (5) d'admission.

3. Filtre (F) à air suivant la revendication 1 ou 2, **caractérisé en ce que** il est prévu deux fenêtres diamétralement opposées l'une à l'autre, de préférence suivant le diamètre de la section transversale perpendiculaire au diamètre suivant lequel sont disposées diamétralement opposées les deux ouvertures.

4. Filtre (F) à air suivant la revendication 1, 2 ou 3, **caractérisé en ce que** les ouvertures (7) longitudinales sont recouvertes par des nervures (9) creuses, dont les dimensions sont suffisantes pour recevoir les trottoirs (6) du conduit d'admission.

5. Conduit (5) d'admission réalisé par thermoformage en matériau non tissé, notamment en polyester, qui comporte deux trottoirs (6) parallèles à l'axe longitudinal du conduit, en faisant saillie de cette surface extérieure du conduit, notamment en étant diamétralement opposés, ce conduit d'admission thermoformé comportant à son extrémité libre un bombement (8) annulaire destiné à venir buter contre un chanfrein (4) d'un filtre (F) à air suivant l'une des revendications 1 à 4.

6. Conduit suivant la revendication 5, **caractérisé en ce que** le conduit d'admission peut également comporter des moyens de fixation permettant sa fixation au filtre à air, et notamment ces moyens de fixation peuvent être constitués d'au moins une protubérance (12), de préférence deux protubérances diamétralement opposées, destinées à venir s'encliqueter dans une ou des fenêtres (13) formées dans le tronçon femelle d'un filtre suivant l'une des revendications 1 à 4.

7. Conduit suivant la revendication 5 ou 6, **caractérisé en ce que** le bombement (8) annulaire comporte un bord avant (10) formant un angle avec l'axe longitudinal du conduit, notamment de 30° à 50°, et le bord avant (10) est déformable notamment en raison de la souplesse ou de l'élasticité du matériau en lequel est formé l'embout, pour venir buter contre un chanfrein (4) d'un filtre, chanfrein qui fait un angle compris entre 50° et 70° par rapport à l'axe longitudinal.

8. Conduit suivant la revendication 5, 6 ou 7, **caractérisé en ce que** les protubérances (12) sont réalisées, en coupe transversale, sous la forme d'échelons (14) progressifs.

9. Conduit suivant la revendication 5, 6, 7 ou 8, **caractérisé en ce qu'**il est également formé un échelon (16) au niveau des trottoirs (6) de part et d'autre de ceux-ci.

10. Ensemble constitué d'un filtre suivant l'une des revendications 1 à 4, et d'un conduit suivant l'une des revendications 5 à 9.
